# EUROPEAN PATENT APPLICATION

(11) **EP 4 730 756 A1**
(43) Date of publication of application: **22.04.2026**
(21) Application number: 24838610.4
(22) Date of filing: 27.06.2024
(51) Int. Cl.: H04M 1/72484, H04W 76/10

(54) **CALL METHOD AND CALL APPARATUS**

(30) Priority: 13.07.2023 CN 202310861543
(71) Applicant: Huawei Technologies Co., Ltd., Shenzhen, Guangdong 518129 (CN)
(72) Inventor: GUO, Zhan, Shenzhen, Guangdong 518129 (CN); YAO, Jing, Shenzhen, Guangdong 518129 (CN); ZHAO, Xingpeng, Shenzhen, Guangdong 518129 (CN)
(74) Representative: Gill Jennings & Every LLP
(86) International application number: PCT/CN2024/102146
(87) International publication number: WO 2025/011354

(57) **Abstract**

Embodiments of this application provide a call method and a call apparatus, applied to the field of terminal technologies. The method includes: A terminal device collects audio data by using a first device, and sends the audio data collected by the first device to a call peer end, where the first device includes one or more of a plurality of devices, and the plurality of devices include the terminal device and an external device that has established a connection relationship with the terminal device; and the terminal device receives audio data from the call peer end, and plays the audio data from the call peer end by using a second device, where the second device includes one or more of the plurality of devices, and at least one device in the first device and at least one device in the second device are different devices in the plurality of devices. According to the technical solutions provided in this application, audio data may be collected and audio data may be played by using different devices, so that call effect can be improved.

## Description

This application claims priority to Chinese Patent Application No. 202310861543.1, filed with the China National Intellectual Property Administration on July 13, 2023 and entitled "CALL METHOD AND CALL APPARATUS", which is incorporated herein by reference in its entirety.

### TECHNICAL FIELD

This application relates to the field of terminal technologies, and in particular, to a call method and a call apparatus.

### BACKGROUND

When receiving a call request or being in a call state, a terminal device having a call function may determine, based on an indication of a user, the terminal device as an audio data processing device interacting with the user, or determine an external audio data processing device that has established a connection to the terminal device as an audio data processing device interacting with the user, and interact with the user by using the determined audio data processing device, to complete a call. The terminal device having the call function may include a mobile phone, a tablet computer, a notebook computer, a desktop computer, and the like. The audio data processing device may include a headset, a speaker, a wireless microphone, and the like.

However, when the terminal device having the call function makes a call by using the foregoing method, a problem of poor call effect occurs. For example, quality of audio played by the audio data processing device is poor, or quality of audio collected by the audio data processing device is poor.

### SUMMARY

This application provides a call method and a call apparatus, to improve call effect of a terminal device.

According to a first aspect, this application provides a call method, where the method includes: A terminal device collects audio data by using a first device, where the first device includes one or more of a plurality of devices, and the plurality of devices include the terminal device and an external device that has established a connection relationship with the terminal device; the terminal device sends, to a call peer end, the audio data collected by the first device; the terminal device receives the audio data from the call peer end; and the terminal device plays audio data from the call peer end by using a second device, where the second device includes one or more of the plurality of devices, and at least one device in the first device and at least one device in the second device are different devices in the plurality of devices.

For example, the terminal device may be a device that has a call function, such as a mobile phone, a tablet computer, a notebook computer, or a desktop computer. The call function includes functions such as a call, a voice, and a video.

For example, the external device may include a device that can collect audio data and/or play audio data, such as a headset, a sound box, or a wireless microphone.

Optionally, the terminal device may establish a wireless connection to the external device by using a wireless communication protocol, and the terminal device may be connected to the external device in a wired manner.

For example, the call peer end may be a peer device that is in a call with the terminal device and may be a device that has a call function, such as a mobile phone, a tablet computer, a notebook computer, or a desktop computer. The call may be initiated by the call peer end or the terminal device.

For example, the at least one device in the first device and the at least one device in the second device are different devices in the plurality of devices, which may include the following cases: When the first device is the terminal device, the second device may be the external device or may include the terminal device and the external device; when the first device is the external device, the second device may be the terminal device or may include the terminal device and the external device; and when the first device includes the terminal device and the external device, the second device may include the terminal device and/or the external device.

In this technical solution, audio data may be collected and audio data may be played by using different devices, so that call effect can be improved.

With reference to the first aspect, in some implementations of the first aspect, the method further includes: The terminal device displays a user interface, where the user interface includes a microphone selection control and a speaker selection control, the microphone selection control is configured to select a device to which a microphone that needs to be used to collect an audio signal during a call belongs, and the speaker selection control is configured to select a device to which a speaker that needs to be used to play the audio signal during the call belongs. That the terminal device collects the audio data by using the first device includes: When a user selects the first device by using the microphone selection control, the terminal device collects the audio data by using the first device. That the terminal device plays the audio data from the call peer end by using the second device includes: When the user selects the second device by using the speaker selection control, the terminal device plays the audio data from the call peer end by using the second device.

Optionally, there may be one or more microphone selection controls, and there may be one or more speaker selection controls.

For example, the microphone selection control may include a microphone control of the terminal device and a microphone control of the external device, and the speaker control may include an earpiece control of the terminal device, a speaker control of the terminal device, and a speaker control of the external device.

For example, the user may determine the first device by tapping the microphone selection control; and correspondingly, the user may determine the second device by tapping the speaker selection control.

For example, the user may select the microphone selection control by inputting a voice indication, to determine the first device. Correspondingly, the user may select the speaker selection control by inputting a voice indication, to determine the second device.

Optionally, the user may select only the first device, or select only the second device, or select both the first device and the second device. This is not specifically limited in this application.

In this implementation, the first device for collecting the audio data and/or the second device for playing the audio data may be directly selected based on an actual requirement of the user, to improve user experience.

With reference to the first aspect, in some implementations of the first aspect, the method further includes: The terminal device displays a user interface, where the user interface includes a call scenario selection control, and the call scenario selection control is used to select a call scenario. That the terminal device collects the audio data by using the first device includes: When an audio data collection device associated with the call scenario selected by a user by using the call scenario selection control includes the first device, the terminal device collects the audio data by using the first device. That the terminal device plays the audio data from the call peer end by using the second device includes: When an audio data playing device associated with the call scenario selected by the user by using the call scenario selection control includes the second device, the terminal device plays the audio data from the call peer end by using the second device.

Optionally, an association relationship between the call scenario and the audio data collection device and/or an association relationship between the call scenario and the audio data playing device may be pre-configured in the terminal device, to improve efficiency.

In this implementation, the user may determine, based on an actual call scenario by using the call scenario selection control, the first device for collecting the audio data and/or the second device for playing the audio data, to improve user experience.

With reference to the first aspect, in some implementations of the first aspect, when the selected call scenario is an outdoor scenario, the first device includes the terminal device, the second device includes the external device, and the external device includes a sound box; and/or when the selected call scenario is a conference scenario, the first device includes the external device, the external device includes a headset, and the second device includes the terminal device; and/ or when the selected call scenario is a voice enhancement scenario, the first device includes the terminal device and the external device, and the second device includes the terminal device and/or the external device.

Optionally, the association relationship between the call scenario and the audio data collection device and/or the association relationship between the call scenario and the audio data playing device may be set based on this implementation, or may be set based on a user habit. This is not specifically limited in this application.

With reference to the first aspect, in some implementations of the first aspect, that the terminal device displays the user interface includes: when the terminal device receives a call request input by the user, or when the terminal device answers a call request of the call peer end, displaying the user interface.

With reference to the first aspect, in some implementations of the first aspect, when the first device includes a plurality of devices in the plurality of devices, the terminal device sends the audio data collected by the first device to the call peer end includes: The terminal device performs synthesis processing on the audio data collected by the first device to obtain synthesized audio data; and the terminal device sends the synthesized audio data to the call peer end.

In this implementation, when the first device includes the terminal device and the external device, synthesis processing may be performed on first audio data collected by the terminal device and second audio data collected by the external device, to further improve call effect.

With reference to the first aspect, in some implementations of the first aspect, that the terminal device performs synthesis processing on the audio data collected by the first device to obtain the synthesized audio data includes: The terminal device obtains the first audio data collected by the terminal device and a start timestamp corresponding to the first audio data; and the terminal device obtains the second audio data collected by the external device and a start timestamp corresponding to the second audio data, where the terminal device and the external device use a same clock source; the first audio data and the second audio data are aligned based on the start timestamps; and synthesis processing is performed on the first audio data and the second audio data to obtain the synthesized audio data.

In this implementation, because a communication channel has been established between the terminal device and the external device, and in this case, the terminal device and the external device use the same clock source to determine the start timestamp for collecting the audio data, so that the start timestamp corresponding to the first audio data and the start timestamp corresponding to the second audio data are the same timestamp.

Therefore, before synthesis processing is performed on the first audio data and the second audio data, the first audio data and the second audio data may be aligned based on the start timestamp for collecting the audio data, so that interference caused by a transmission delay of the external device can be eliminated, and call effect is improved.

According to a second aspect, this application provides a call apparatus, where the apparatus includes modules configured to implement the method in any one of the first aspect or the implementations of the first aspect. For example, the apparatus may include a transceiver module and a processing module.

In some implementations, these modules may be implemented by software and/or hardware. In this implementation, the apparatus may include a processor and a transceiver. For example, the processing module may be implemented by a processor by executing program code stored in a memory, and the transceiver module may be implemented by a transceiver. Optionally, the apparatus may further include a storage module and a communication module.

It may be understood that the call apparatus provided in the second aspect may be a terminal device or a chip used in the terminal device.

According to a third aspect, this application provides a call apparatus, including a processor and a memory, where the memory is configured to store program instructions, and the processor is configured to execute the program instructions in the memory, to perform the method according to any one of the first aspect or the possible implementations of the first aspect.

According to a fourth aspect, this application provides a communication system, including the terminal device and the external device in the first aspect.

According to a fifth aspect, this application provides a computer-readable storage medium. The computer-readable medium stores program code executed by a communication device, and the program code includes instructions used for implementing the method in the first aspect.

According to a sixth aspect, this application provides a computer program product including instructions. When the computer program product is run on a communication device, the communication device is enabled to implement the method in the first aspect.

It should be understood that the second aspect to the sixth aspect of this application correspond to the technical solutions of the first aspect of this application, and beneficial effect achieved by the aspects and the corresponding feasible implementations is similar. Details are not described again.

### BRIEF DESCRIPTION OF DRAWINGS

FIG. 1 is a diagram of an application scenario according to an embodiment of this application;
FIG. 2 is a diagram of a hardware structure of a terminal device according to an embodiment of this application;
FIG. 3 is a diagram of a hardware structure of an external device according to an embodiment of this application;
FIG. 4 is a schematic flowchart of a call method according to an embodiment of this application;
FIG. 5 is a diagram of a user interface according to an embodiment of this application;
FIG. 6 is a diagram of a user interface according to another embodiment of this application;
FIG. 7 is a diagram of a structure of a call method according to an embodiment of this application;
FIG. 8 is a diagram of a structure of a call method according to another embodiment of this application;
FIG. 9 is a diagram of a structure of a call method according to still another embodiment of this application;
FIG. 10 is a diagram of a structure of a call apparatus according to an embodiment of this application; and
FIG. 11 is a diagram of a structure of a call apparatus according to another embodiment of this application.

### DESCRIPTION OF EMBODIMENTS

Example embodiments are described in detail herein, and examples of the example embodiments are presented in the accompanying drawings. When the following description relates to the accompanying drawings, unless otherwise specified, same numbers in different accompanying drawings represent same or similar elements. Implementations described in the following example embodiments do not represent all implementations consistent with this application. On the contrary, the implementations are merely examples of apparatuses and methods that are described in the appended claims in detail and that are consistent with some aspects of this application.

It should be noted that, in this application, the term such as "example" or "for example" is used for representing giving an example, an illustration, or a description. Any embodiment or design scheme described as an "example" or "for example" in this application should not be explained as being more preferred or having more advantages than another embodiment or design scheme. Exactly, the term "example", "for example", or the like is used to present a related concept in a specific manner.

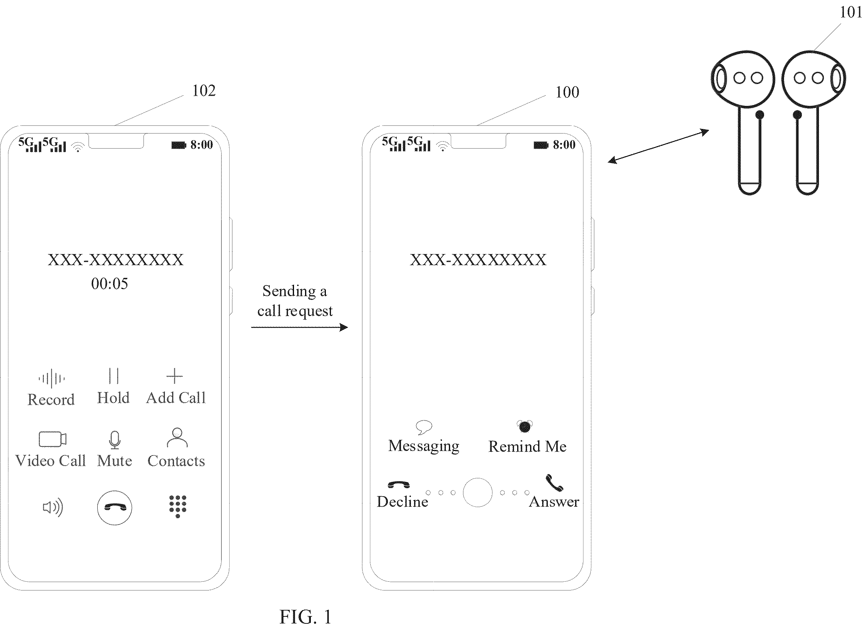

For example, FIG. 1 is a diagram of an application scenario according to an embodiment of this application.

As shown in FIG. 1, an application scenario may include a terminal device 100, an external device 101, and a call peer end 102. The terminal device 100 may be a device that has a call function, such as a mobile phone, a tablet computer, a notebook computer, or a desktop computer. The external device 101 may be an audio device that is connected to the terminal device 100, such as a Bluetooth headset, an in-vehicle sound box, or a wireless microphone. The call peer end 102 is a peer device that is in a call with the terminal device 100 and may be a device that has a call function, such as a mobile phone, a tablet computer, a notebook computer, or a desktop computer.

The terminal device 100 may establish a connection to the external device 101 by using a wireless communication protocol. The wireless communication protocol may be Bluetooth (blue tooth, BT), SparkLink, wireless fidelity (wireless fidelity, Wi-Fi), ultra-wideband (ultra wideband, UWB), or the like. After the connection is established, when the terminal device 100 receives a call request or is in a call state, the terminal device 100 may use, based on an indication of a user, the terminal device 100 as an audio data processing device interacting with the user or use the external device 101 as an audio data processing device interacting with the user to complete the call. Interaction with the user may be understood as follows: In a process in which the user uses the terminal device 100 to make the call with the call peer end 102, the audio data processing device may collect audio data of the user and play audio data from the call peer end 102 for the user.

For example, the call may be a phone call, a video call, a voice call, or the like.

For example, the terminal device 100 is a mobile phone, and the external device 101 is a headset. The mobile phone may be connected to the headset via Bluetooth, and the user may make a call with the call peer end 102 via the headset/mobile phone.

It may be understood that embodiments of this application may be applied to a scenario in which one terminal device and a plurality of external devices are included. For example, embodiments of this application may be applied to a scenario in which a mobile phone, a Bluetooth headset, and a Bluetooth sound box are included. This is not specifically limited in this embodiment of this application.

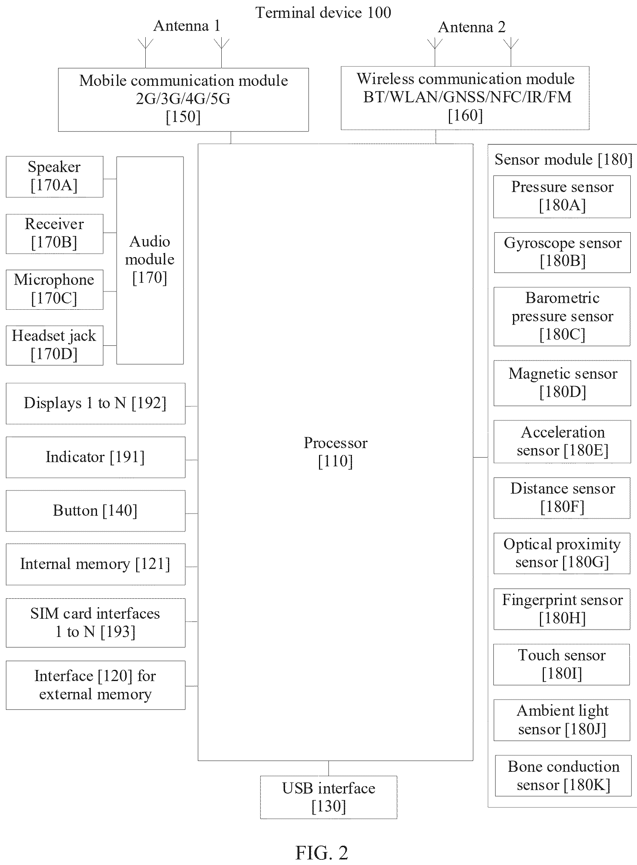

For example, FIG. 2 is a diagram of a hardware structure of a terminal device according to an embodiment of this application.

As shown in FIG. 2, the terminal device 100 may include a processor 110, an interface 120 of external memory, an internal memory 121, a universal serial bus (universal serial bus, USB) interface 130, a button 140, an antenna 1, an antenna 2, a mobile communication module 150, a wireless communication module 160, an audio module 170, a speaker 170A, a receiver 170B, a microphone 170C, a headset jack 170D, a sensor module 180, an indicator 191, a display 192, a subscriber identity module (subscriber identification module, SIM) card interface 193, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a touch sensor 180I, an ambient light sensor 180J, a bone conduction sensor 180K, and the like.

It may be understood that the structure illustrated in this embodiment of the present invention does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and, therefore, improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a USB interface, and/or the like.

In some embodiments, the processor 110 may include a plurality of groups of I2C buses. The processor 110 may be separately coupled to the touch sensor 180I and the like through different I2C bus interfaces. For example, the processor 110 may be coupled to the touch sensor 180I through the I2C interface, so that the processor 110 communicates with the touch sensor 180I through the I2C bus interface, to implement a touch function of the terminal device 100.

The I2S interface may be configured to perform audio communication. In some embodiments, the processor 110 may include the plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through the external device 101 (for example, a Bluetooth headset).

The PCM interface may also be used to perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through the external device 101 (for example, a Bluetooth headset).

It may be understood that an interface connection relationship between the modules shown in this embodiment of the present invention is merely an example for description, and does not constitute a limitation on the structure of the terminal device 100. In some other embodiments of this application, the terminal device 100 may alternatively use an interface connection manner different from that in the foregoing embodiment or use a combination of a plurality of interface connection manners.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution applied, to the terminal device 100, to wireless communication including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least a part of functional modules in the mobile communication module 150 may be disposed in the processor 110. In some embodiments, at least a part of functional modules of the mobile communication module 150 may be disposed in a same device as at least a part of modules of the processor 110.

The wireless communication module 160 may provide a solution, applied to the terminal device 100, for wireless communication that includes a wireless local area network (wireless local area networks, WLAN) (for example, a Wi-Fi network), BT, a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In this embodiment of this application, the terminal device 100 and the external device 101 may exchange messages by using the wireless communication module 160, or the terminal device 100 may send an audio data packet to the external device 101 by using the wireless communication module 160.

The terminal device 100 implements a display function by using the GPU, the display 192, the application processor, and the like. The GPU is a microprocessor used for image processing and is connected to the display 192 and the application processor. The GPU is configured to: perform mathematical and geometric computation and render an image. The processor 110 may include one or more GPUs that execute program instructions to generate or change display information.

The display 192 is configured to display an image, a video, and the like. The display 192 includes a display panel. The display panel may be a liquid crystal display (liquid crystal display, LCD), an organic light-emitting diode (organic light-emitting diode, OLED), an active-matrix organic light-emitting diode or an active-matrix organic light-emitting diode (active-matrix organic light emitting diode, AMOLED), a flexible light-emitting diode (flexible light-emitting diode, FLED), a mini-LED, a micro-LED, a micro-OLED, a quantum dot light-emitting diode (quantum dot light emitting diode, OLED), or the like. In some embodiments, the terminal device 100 may include one or N displays 192, where N is a positive integer greater than 1.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) created during use of the terminal device 100, and the like. In addition, the internal memory 121 may include a high-speed random access memory or may also include a non-volatile memory, for example, at least one magnetic disk storage device, a flash memory, or a universal flash storage (universal flash storage, UFS). The processor 110 executes various functional applications and data processing of the terminal device 100 by running the instructions stored in the internal memory 121 and/or instructions stored in a memory disposed in the processor.

The terminal device 100 may implement an audio function such as music playing or audio transmission of a call service through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio signal input into a digital audio signal. The audio module 170 may be further configured to encode and decode an audio signal. In some embodiments, the audio module 170 may be disposed in the processor 110, or a part of functional modules in the audio module 170 is disposed in the processor 110.

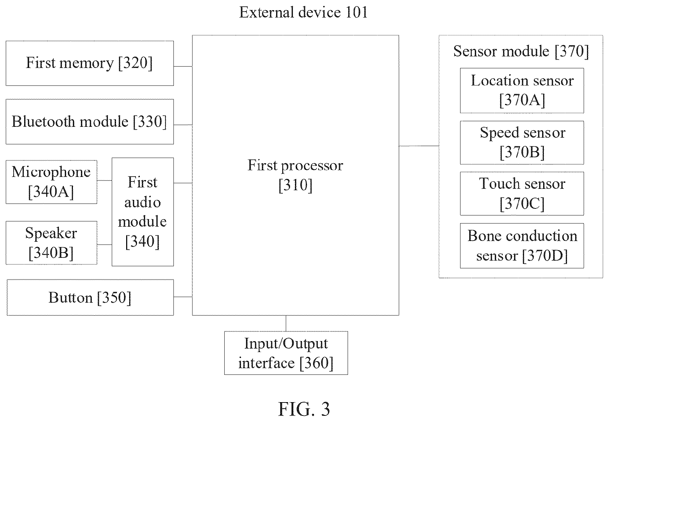

For example, FIG. 3 is a diagram of a hardware structure of an external device according to an embodiment of this application.

As shown in FIG. 3, the external device 101 may include a first processor 310, a first memory 320, a Bluetooth module 330, a first audio module 340, a microphone 340A, a speaker 340B, a button 350, an input/output interface 360, and a sensor module 370. The sensor module 370 may include a location sensor 370A, a speed sensor 370B, a touch sensor 370C, a bone conduction sensor 370D, and the like.

It may be understood that a structure illustrated in this embodiment of this application does not constitute a specific limitation on the external device 101. In some other embodiments of this application, the external device 101 may include more or fewer components than those shown in the figure, or combine some components, or split some components, or have different component arrangements. The components shown in the figure may be implemented by hardware, software, or a combination of software and hardware.

The first processor 310 may include one or more processing units. For example, the first processor 310 may include an AP, a modem processor, a controller, a DSP, a baseband processor, an NPU, and the like. Different processing units may be independent components, or may be integrated into one or more processors.

The controller may generate an operation control signal based on instruction operation code and a time sequence signal, to complete control of instruction reading and instruction execution.

A memory may be further disposed in the first processor 310, and is configured to store instructions and data.

The first memory 320 may be a read only memory (read only memory, ROM), a static storage device, a dynamic storage device, or a random access memory (random access memory, RAM). The first memory 320 may be configured to store computer-executable program code. The executable program code includes instructions.

The first memory 320 may include a program storage area and a data storage area. The program storage area may store an operating system, an application required by at least one function (for example, a sound collection function or a sound playing function), and the like. The data storage area may store data (for example, audio data) created during use of the external device 101, and the like. In addition, the first memory 320 may include a high-speed random access memory or may also include a non-volatile memory, for example, at least one magnetic disk storage device, a flash memory, or a universal flash storage (universal flash storage, UFS). The first processor 310 performs various functional applications of the external device 101 and data processing by running the instructions stored in the first memory 320 and/or the instructions stored in the memory disposed in the processor.

The Bluetooth module 330 may also be referred to as a Bluetooth chip. The external device 101 may perform pairing with a Bluetooth module of another device by using the Bluetooth module 330 and establish a Bluetooth connection, to implement wireless communication and service processing between the external device 101 and the another device through the Bluetooth connection. Generally, the Bluetooth module 330 may support classic Bluetooth broadcast (basic rate/enhanced data rate, BR/EDR) and Bluetooth low-energy broadcast (blue tooth low energy, BLE), for example, may receive/send paging (page) information or receive/send a BLE broadcast message.

The Bluetooth module 330 receives an electromagnetic wave through an antenna, performs frequency modulation and filtering processing on an electromagnetic wave signal, and sends a processed signal to the first processor 310. The Bluetooth module 330 may further receive a to-be-sent signal from the first processor 310, perform frequency modulation and amplification on the signal, and convert the signal into an electromagnetic wave for radiation through the antenna.

The first audio module 340 is configured to convert digital audio information into an analog audio signal for output, and is also configured to convert an analog audio input into a digital audio signal. The first audio module 340 may be further configured to encode and decode an audio signal. In some embodiments, the first audio module 340 may be disposed in the first processor 310, or a part of functional modules of the first audio module 340 is disposed in the first processor 310.

The first audio module 340 may be configured to manage audio data, and implement input and output of an audio signal by the external device 101. For example, the first audio module 340 may obtain an audio signal from the Bluetooth module 330 or transmit an audio signal to the Bluetooth module 330, to implement functions such as answering and making a call by using the external device 101, playing audio, enabling/disabling an electronic voice assistant connected to the external device 101, and receiving/sending voice data of a user.

The first audio module 340 may include a speaker 340B and a speaker assembly that are configured to output an audio signal, a microphone 340A, a microphone sound receiving circuit that cooperates with the microphone, and the like. The speaker 340B may be configured to convert an audio electrical signal into a sound signal and play the sound signal. The microphone 340A may be configured to convert a sound signal into an audio electrical signal.

The microphone 340A may be a plurality of microphones, such as an air conduction microphone and a bone conduction microphone.

The input/output interface 360 may be configured to provide a wired connection between the external device 101 and another device for charging or communication. In some embodiments, the input/output interface may be a USB interface. In some other embodiments, the input/output interface 360 may be an electrical connector, and the external device 101 may be electrically connected to another device through an electrical connector, to charge a battery in the external device 101.

In addition, the external device 101 may further include the sensor module 370. For example, the external device 101 is a Bluetooth headset. The sensor module 370 may include: the location sensor 370A, configured to determine a location of the Bluetooth headset; the speed sensor 370B, configured to determine a moving speed of the Bluetooth headset; the touch sensor 370C, configured to detect a touch operation of a user; and the bone conduction sensor 370D, configured to obtain a vibration signal of a vibration bone of a human vocal-cord part, parse out a voice signal, and implement a voice function, to receive a voice indication of the user. The sensor module 370 may further include: a distance sensor or an optical proximity sensor, configured to determine whether the Bluetooth headset is worn by a user; a fingerprint sensor, configured to detect a fingerprint of the user, identify a user identity, and the like; an ambient light sensor, which may adaptively adjust some parameters (for example, a volume) based on perceived luminance of ambient light; and some other sensors.

In some embodiments, the touch sensor 370C may detect touch operations of the user, such as single-tap, double-tap, multi-tap, touch and hold, and heavy press, and may further perform user fingerprint recognition.

An outer surface of the external device 101 may further include components such as the button 350, an indicator light (which may indicate a battery level, an incoming call/outgoing call, a pairing mode, and another status), and a display (which may prompt the user with related information). The button 350 may be a physical button, a touch button (used in cooperation with the touch sensor), or the like, and is configured to trigger operations such as power-on, power-off, pause, play, record, start pairing, and reset.

When the terminal device is connected to the external device, and the terminal device is in a call state, the user can only select the terminal device as an audio data processing device interacting with the user, or use the external device as an audio data processing device interacting with the user to complete the call. However, because locations of the terminal device and the external device are different, quality of audio collected by the terminal device and the external device is poor or quality of played audio is poor, thereby affecting call effect. A mobile phone and a Bluetooth headset are used as an example. Compared with a microphone of the Bluetooth headset, a microphone of the mobile phone may be closer to the mouth of the user, so that a signal-to-noise ratio of audio data collected by the mobile phone is higher than a signal-to-noise ratio of audio data collected by the Bluetooth headset; and compared with a speaker/earpiece of the mobile phone, a speaker of the Bluetooth headset is closer to an ear of the user, so that a signal-to-noise ratio of audio data played by the Bluetooth headset is higher than a signal-to-noise ratio of audio data played by the mobile phone. Therefore, no matter whether the mobile phone is used as the audio data processing device, or the Bluetooth headset is used as the audio data processing device, a problem of poor call effect occurs.

In view of this, this application provides a call method and a call apparatus. When a terminal device is in a call state, a user may select, based on an actual requirement, the terminal device and/or an external device to collect audio data of a call or may select the terminal device and/or the external device to play audio data from a call peer end, to improve call effect. In addition, because a plurality of devices may be selected as audio data processing devices in this application, sensors of the plurality of devices may also be comprehensively utilized to further improve call quality.

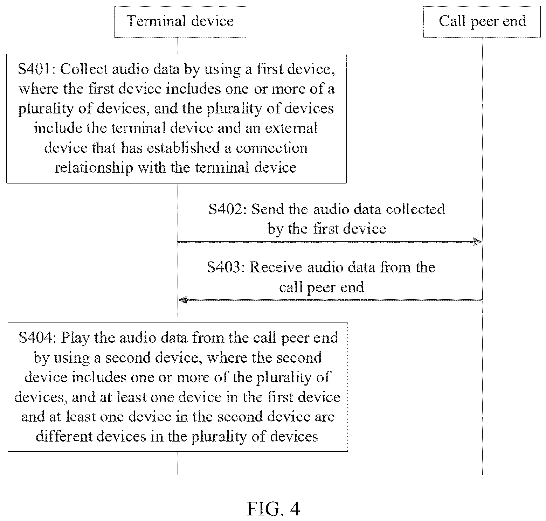

For example, FIG. 4 is a schematic flowchart of a call method according to an embodiment of this application. As shown in FIG. 4, the method includes S401 to S404.

S401: A terminal device collects audio data by using a first device, where the first device includes one or more of a plurality of devices, and the plurality of devices include the terminal device and an external device that has established a connection relationship with the terminal device.

For example, when the first device is the terminal device 100, the terminal device 100 may collect the audio data by using the microphone 170C of the terminal device 100.

For example, when the first device is the external device 101, the terminal device 100 may collect the audio data by using the microphone 340A of the external device 101. For example, after the terminal device 100 establishes a connection to the external device 101, the terminal device 100 may communicate with the external device 101 to indicate the external device 101 to collect the audio data by using the microphone 340A. After receiving a message, the external device 101 controls the microphone 340A to collect the audio data and transmits the collected audio data to the terminal device 100.

Optionally, the terminal device 100 may be connected to the external device 101 in a wired manner. For example, the terminal device 100 may be connected to the external device 101 through the USB interface 130 in a wired manner.

Optionally, the terminal device 100 may be connected to the external device 101 by using a wireless communication protocol. For example, the terminal device 100 may establish a wireless connection to the Bluetooth module 330 of the external device 101 by using the wireless communication module 160.

For example, when the first device includes the terminal device 100 and the external device 101, the terminal device 100 may perform synthesis processing on first audio data collected by using the microphone 170C and second audio data collected by using the microphone 340A to obtain synthesized audio data.

For example, the terminal device 100 obtains the first audio data and a start timestamp corresponding to the first audio data and obtains the second audio data and a start timestamp corresponding to the second audio data; and the terminal device 100 aligns the first audio data with the second audio data based on the start timestamps and performs synthesis processing on the first audio data and the second audio data to obtain the synthesized audio data.

For example, synthesis processing includes that the terminal device 100 enhances the first audio data based on the second audio data and a call voice processing algorithm, so that call quality can be improved. The call voice processing algorithm is not specifically limited in this application.

It should be noted that a communication channel has been established between the terminal device 100 and the external device 101, and in this case, the terminal device 100 and the external device 101 use a same clock source to determine a start timestamp for collecting audio data, so that the start timestamp corresponding to the first audio data and the start timestamp corresponding to the second audio data are the same timestamp.

Optionally, there may be a plurality of external devices 101 connected to the terminal device 100.

S402: The terminal device sends the audio data collected by the first device to a call peer end.

For example, when the first device is the terminal device 100, the terminal device 100 transmits the audio data collected by using the microphone 170C to the audio module 170. The audio module 170 converts the audio data into a digital signal and transmits the digital signal to the processor 110. After performing processing such as noise reduction and echo cancellation on the digital signal, the processor 110 modulates a processed digital signal into an electromagnetic wave signal. After the mobile communication module 150 performs amplification and filtering processing on the electromagnetic wave signal, the electromagnetic wave signal is transmitted to the call peer end 102 through the antenna 1.

For example, when the first device is the external device 101, the terminal device 100 receives, by using the wireless communication module 160, the audio data collected by the external device 101. After the audio data is processed by the processor 110 and the mobile communication module 150, the audio data is transmitted to the call peer end 102 through the antenna 1.

For example, when the first device includes the terminal device 100 and the external device 101, the processor 110 performs synthesis processing on the first audio data collected by the terminal device 100 and the second audio data collected by the external device 101, and transmits the synthesized audio data to the mobile communication module 150. After being processed by the mobile communication module 150, the synthesized audio data is transmitted to the call peer end 102 through the antenna 1.

S403: The terminal device receives audio data from the call peer end.

For example, the terminal device 100 may receive the audio data from the call peer end 102 through the antenna 1.

S404: The terminal device plays the audio data from the call peer end by using a second device, where the second device includes one or more of the plurality of devices, and at least one device in the first device and at least one device in the second device are different devices in the plurality of devices.

For example, when the second device is the terminal device 100, the terminal device 100 may play the audio data from the call peer end 102 by using the speaker 170A or the receiver 170B of the terminal device 100. For example, after the terminal device 100 receives the audio data from the call peer end 102, the mobile communication module 150 performs processing such as filtering and amplification on a received electromagnetic wave signal, and then transmits a processed electromagnetic wave signal to the processor 110. The processor 110 demodulates the electromagnetic wave signal into a digital signal. The audio module 170 converts the digital signal into an analog signal, and finally the speaker 170A or the receiver 170B plays the analog signal.

For example, when the second device is the external device 101, the terminal device 100 may play the audio data from the call peer end 102 by using the speaker 340B of the external device 101. For example, after the terminal device 100 receives the audio data from the call peer end 102, the mobile communication module 150 and the processor 110 process the audio data, and the audio data is transmitted to the first processor 310 of the external device 101 through the wireless communication module 160 and the Bluetooth module 330. After the first processor 310 demodulates the audio data into a digital signal, the first audio module 340 converts the digital signal into an analog signal, and finally the speaker 340B plays the analog signal.

It should be understood that, when the second device includes the terminal device 100 and the external device 101, the foregoing examples are combined, and details are not described herein again.

It should be noted that the at least one device in the first device and the at least one device in the second device are different devices in the plurality of devices, which includes the following cases: When the first device is the terminal device, the second device may be the external device or may include the terminal device and the external device; when the first device is the external device, the second device may be the terminal device or may include the terminal device and the external device; or when the first device includes the terminal device and the external device, the second device may include the terminal device and/or the external device.

It may be understood that, between execution of the embodiment shown in FIG. 4, both the terminal device and the call peer end establish a wireless communication link with a base station, so that the terminal device and the call peer end can normally make a call with each other.

It may be understood that the two steps S401 and S402 and the two steps S403 and S404 are in an OR relationship, and there is no sequence between the two groups of steps. For example, steps S401 and S402 may be performed first, and then steps S403 and S404 are performed. For another example, steps S403 and S404 may be performed first, and then steps S401 and S402 are performed.

In this embodiment of this application, audio data may be collected and audio data may be played by using different devices, so that call effect can be improved.

In an implementation, when the terminal device receives a call request entered by a user, or when the terminal device answers a call request of the call peer end, a user interface may be displayed. The user interface may include a selection control, so that the user can select, based on an actual requirement, the first device for collecting the audio data and the second device for playing the audio data, to improve user experience.

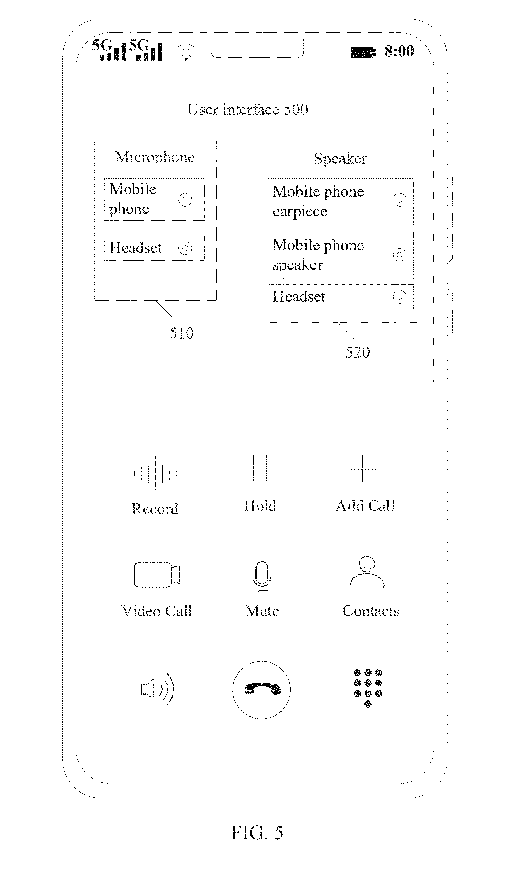

For example, FIG. 5 is a diagram of a user interface according to an embodiment of this application.

As shown in FIG. 5, the user interface 500 includes a microphone selection control 510 and a speaker selection control 520. The microphone selection control 510 includes a mobile phone and a headset, and the speaker selection control 520 includes a mobile phone earpiece, a mobile phone speaker, and a headset.

The microphone selection control 510 is configured to select a device to which a microphone that needs to be used to collect an audio signal during a call belongs, and the speaker selection control 520 is configured to select a device to which a speaker that needs to be used to play the audio signal during the call belongs.

For example, the terminal device 100 may collect audio data based on a first device selected by a user by using the microphone selection control 510. Correspondingly, the terminal device 100 may play audio data from the call peer end 102 based on a second device selected by the user by using the speaker selection control 520.

Optionally, the user may select the first device or the second device by tapping the user interface 500. For example, when the user taps the mobile phone in the microphone selection control 510, the terminal device 100 may collect the audio data by using a microphone of the mobile phone. When the user taps the headset in the speaker selection control 520, the terminal device 100 may play the audio data from the call peer end 102 by using a speaker of the headset.

The user may select only the first device, or select only the second device, or select both the first device and the second device. This is not limited in this application.

Optionally, the user may select the microphone selection control 510 and/or the speaker selection control 520 by inputting a voice indication, to select the first device and/or the second device.

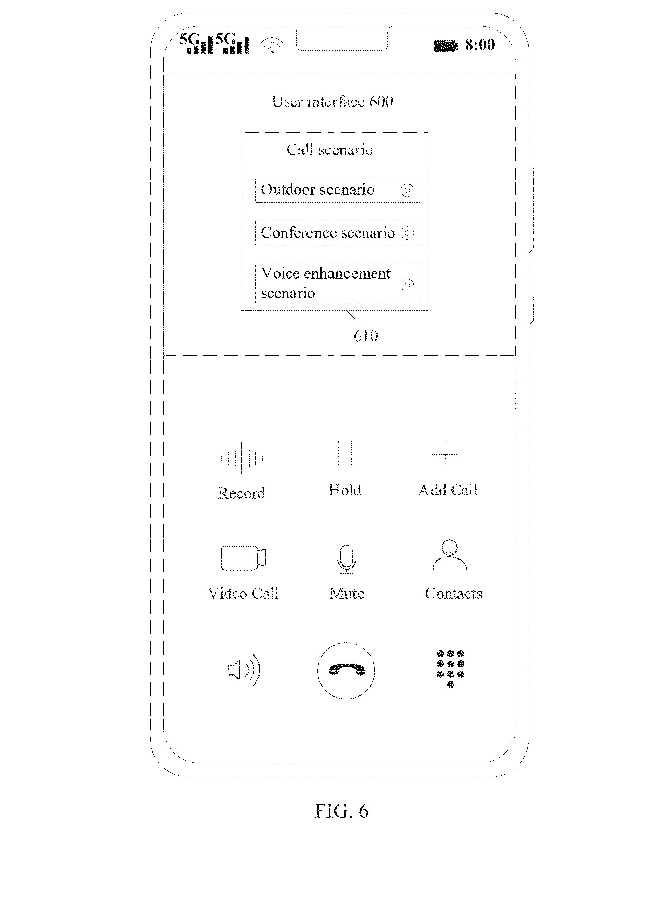

For example, FIG. 6 is a diagram of a user interface according to another embodiment of this application.

As shown in FIG. 6, the user interface 600 includes a call scenario selection control 610. The call scenario selection control 610 is configured to select a call scenario of the terminal device 100. The call scenario may also be referred to as a call mode.

For example, the call scenario selection control 610 includes an outdoor scenario control, a conference scenario control, and a voice enhancement scenario control.

For example, the user may select the call scenario by using the call scenario selection control 610, and select the first device based on an audio data collection device associated with the call scenario. Correspondingly, the user may select the call scenario by using the call scenario selection control 610 and select the second device based on an audio data playing device associated with the call scenario.

Optionally, an association relationship between the call scenario and the audio data collection device and an association relationship between the call scenario and the audio data playing device may be pre-configured in the terminal device, to improve efficiency.

For example, the association relationship between the call scenario and the audio data collection device and the association relationship between the call scenario and the audio data playing device may include: When the call scenario selected by the user is an outdoor scenario, the first device may be the terminal device 100, and the second device may be the external device 101. The external device 101 may be a sound box or an in-ear headset.

In this example, when the user is in an outdoor scenario with high ambient sound, the microphone of the terminal device 100 may be closer to the mouth of the user, so that signal strength of the audio data collected by the terminal device 100 is greater, a signal-to-noise ratio is higher, and audio data received by the call peer end 102 is clearer. In addition, if the external device 101 is the sound box, because signal strength of audio data played by the sound box is greater, the user can hear the audio data from the call peer end 102 more clearly. If the external device 101 is the in-ear headset, because a speaker of the headset is closer to the ear of the user, a signal-to-noise ratio of audio data played by the headset is higher, so that the user can hear the audio data from the call peer end 102 more clearly.

For example, the association relationship between the call scenario and the audio data collection device and the association relationship between the call scenario and the audio data playing device may include: When the call scenario selected by the user is a conference scenario, the first device may be the external device 101, the external device 101 may be the headset, and the second device may be the terminal device 100.

In this example, when the user is in a multi-person remote conference scenario, the external device 101 (for example, a bone conduction headset) worn by the user may be used to collect a voice of the user, so that interference caused by a human voice or an ambient sound around the user may be suppressed, and therefore, the audio data received by the call peer end 102 is clearer. In addition, when the audio data from the call peer end 102 is played, the terminal device 100 and/or the external device 101 may be selected based on a user requirement to play the audio data from the call peer end 102.

For example, the association relationship between the call scenario and the audio data collection device and the association relationship between the call scenario and the audio data playing device may include: When the call scenario selected by the user is a voice enhancement scenario, the first device includes the terminal device 100 and the external device 101, and the second device includes the terminal device 100 and/or the external device 101.

In this example, when the call peer end 102 cannot clearly hear the voice of the user, the user may select the voice enhancement scenario, so that the terminal device 100 and the external device 101 may collect the audio data at the same time, and the terminal device 100 performs synthesis processing on the audio data, to send the synthesized audio data to the call peer end 102, to improve call effect.

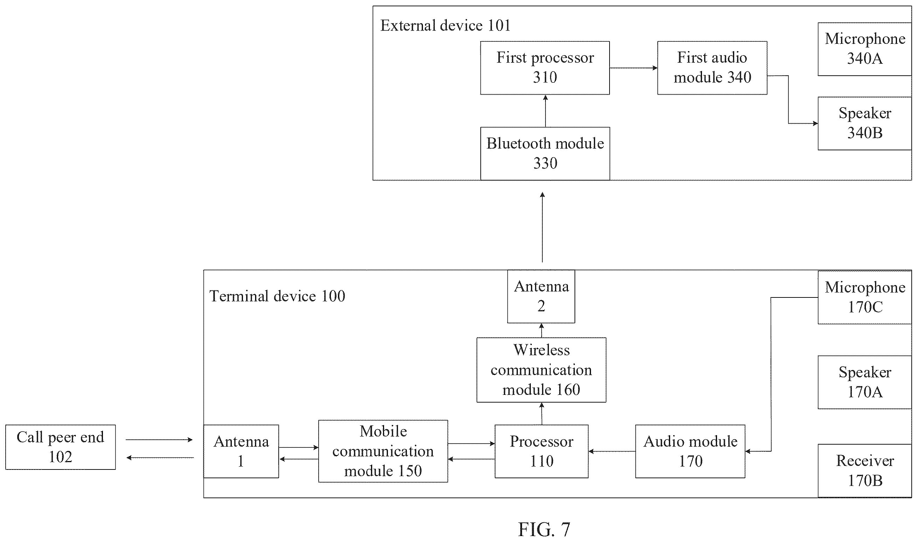

Optionally, when the user performs selection on the user interface 500, diagrams of structures of a call method performed by the terminal device 100 and the external device 101 are shown in FIG. 7 to FIG. 9. The terminal device 100 has established a communication channel with the external device 101 and the call peer end 102.

In a first example, a diagram of a structure of a call method in which the user selects, on the user interface 500, the microphone 170C of the terminal device 100 to collect the audio data and selects the speaker 340B of the external device 101 to play the audio data from the call peer end 102 is shown in FIG. 7.

It should be understood that when the user selects the outdoor scenario control on the user interface 600, the structure shown in FIG. 7 is also applicable.

In this example, when the audio data is collected by using the microphone 170C, the audio data collected by the microphone 170C is transmitted to the call peer end 102 through the audio module 170, the processor 110, the mobile communication module 150, and the antenna 1. When the audio data from the call peer end 102 is played by using the speaker 340B, after the antenna 1 of the terminal device 100 receives the audio data from the call peer end 102, the audio data is transmitted to the Bluetooth module 330 of the external device 101 through the mobile communication module 150, the processor 110, the wireless communication module 160, and the antenna 2 and then is transmitted to the speaker 340B through the Bluetooth module 330, the first processor 310, and the first audio module 340.

It should be understood that, in this example, in the communication channel established between the terminal device 100 and the external device 101, a network resource used to transmit, to the terminal device 100, the audio data collected by the external device 101 by using the microphone 340A is in an idle state.

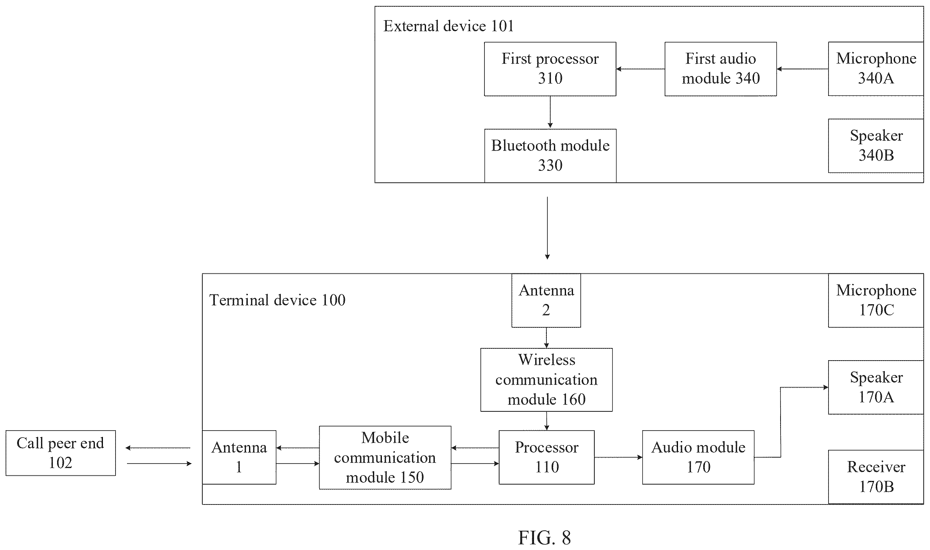

In a second example, a diagram of a structure of a call method in which the user selects, on the user interface 500, the microphone 340A of the external device 101 to collect the audio data and selects the speaker 170A of the terminal device 100 to play the audio data from the call peer end 102 is shown in FIG. 8.

It should be understood that, when the user selects the conference scenario control on the user interface 600, the structure shown in FIG. 8 is also applicable.

In this example, when the audio data is collected by using the microphone 340A, the audio data collected by the microphone 340A is transmitted to the antenna 2 of the terminal device 100 through the first audio module 340, the first processor 310, and the Bluetooth module 330 and then is transmitted to the call peer end 102 through the antenna 2, the wireless communication module 160, the processor 110, the mobile communication module 150, and the antenna 1. When the audio data from the call peer end 102 is played by using the speaker 170A, after the antenna 1 of the terminal device 100 receives the audio data from the call peer end 102, the audio data is transmitted to the speaker 170A through the mobile communication module 150, the processor 110, and the audio module 170.

It should be understood that, in this example, in the communication channel established between the terminal device 100 and the external device 101, a network resource used to transmit the audio data from the call peer end 102 to the external device 101 is in the idle state.

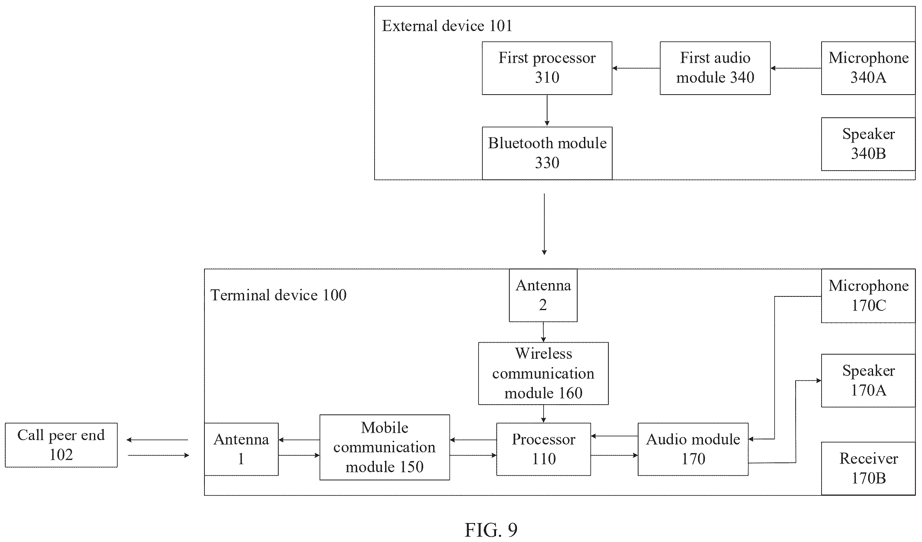

In a third example, a diagram of a structure of a call method in which the user selects, on the user interface 500, the microphone 170C of the terminal device 100 and the microphone 340A of the external device 101 to collect the audio data and selects the speaker 170A of the terminal device 100 to play the audio data from the call peer end 102 is shown in FIG. 9.

It should be understood that, when the user selects the voice enhancement scenario control on the user interface 600, the structure shown in FIG. 9 is also applicable.

In this example, when the audio data is collected by using the microphone 170C and the microphone 340A, the audio data collected by using the microphone 340A is transmitted to the antenna 2 of the terminal device 100 through the first audio module 340, the first processor 310, and the Bluetooth module 330 and then is transmitted to the processor 110 through the antenna 2 and the wireless communication module 160. The audio data collected by using the microphone 170C is transmitted to the processor 110 through the audio module 170, and the processor 110 performs synthesis processing on two channels of audio data to obtain synthesized audio data. The synthesized audio data is transmitted to the call peer end 102 through the mobile communication module 150 and the antenna 1. When the audio data from the call peer end 102 is played by using the speaker 170A, the audio data is transmitted to the speaker 170A through the antenna 1, the mobile communication module 150, the processor 110, and the audio module 170.

It should be understood that, in this example, in the communication channel established between the terminal device 100 and the external device 101, the network resource used to transmit the audio data from the call peer end 102 to the external device 101 is in the idle state.

Optionally, when transmitting, to the terminal device 100, the audio data collected by the external device 101, the external device 101 may transmit audio data collected by only one microphone (for example, an air conduction microphone or a bone conduction microphone), or may transmit audio data collected by a plurality of microphones. This is not specifically limited in this application.

Optionally, the external device 101 may further transmit, to the terminal device 100, data collected by a sensor (for example, the location sensor 370A and the speed sensor 370B) other than the microphone. The terminal device 100 may optimize a call voice processing algorithm of the terminal device 100 based on the data, to improve call quality.

Optionally, when the external device 101 is the headset, the external device 101 may send, to the terminal device 100, an audio signal collected by a single earbud or a pair of earbuds.

Optionally, when there is more than one external device 101, the terminal device 100 may receive audio signals collected from a plurality of external devices 101.

Optionally, the user interface 500 and the user interface 600 may be user interfaces of the terminal device 100, or may be user interfaces of the external device 101. This is not specifically limited in this application.

Optionally, the user interface 500 and the user interface 600 may be simultaneously displayed on the terminal device 100, or may not be simultaneously displayed on the terminal device 100. This is not specifically limited in this application.

Optionally, the terminal device 100 may determine the first device and/or the second device by collecting at least one piece of information of an ambient sound around the terminal device 100, an ambient sound around the external device 101, and sound information of the user and display, on the user interface, a control or confirmation information for the user to select, so that call quality is improved.

For example, when detecting that the voice of the user is too low, the terminal device 100 may display a recommendation window on the user interface. The recommendation window includes information about "whether to adjust the call scenario to the voice enhancement scenario" and selection controls of "yes" and "no" for the user to select. If the user selects "yes", the terminal device 100 adjusts the call scenario to the voice enhancement scenario and correspondingly adjusts the first device and the second device.

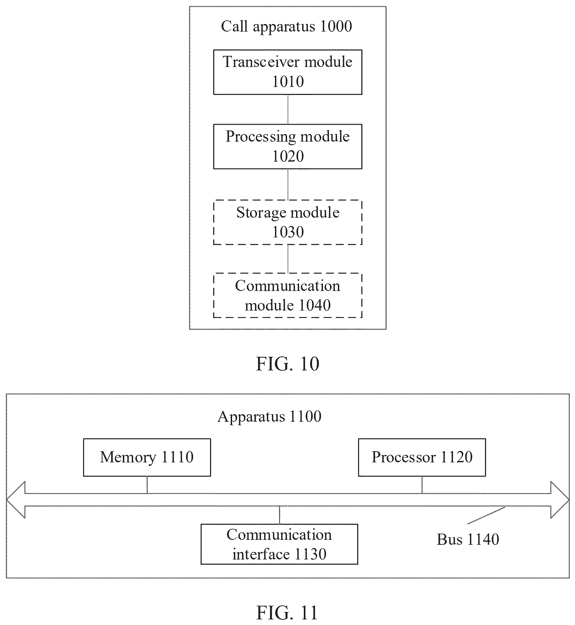

FIG. 10 is a diagram of a structure of a call apparatus according to an embodiment of this application. As shown in FIG. 10, the call apparatus 1000 includes a transceiver module 1010 and a processing module 1020.

For example, the call apparatus 1000 may be configured to implement the call method shown in FIG. 4. The transceiver module 1010 is configured to perform operations performed by the terminal device 100 in steps S402 and S403, and the processing module 1020 is configured to perform steps S401 and S404.

In a possible implementation, the call apparatus 1000 may further include a storage module 1030. The storage module 1030 may include one or more memories. The memory may be a component, in one or more devices or circuits, configured to store a program or data.

The storage module 1030 may exist independently and is connected to the processing module 1020 through a communication bus. The storage module 1030 may also be integrated with the processing module 1020.

For example, the call apparatus 1000 may be a chip or a chip system of the terminal device 100 in this embodiment of this application. The storage module 1030 may store computer-executable instructions of the method of the terminal device 100, so that the processing module 1020 performs the method performed by the terminal device 100 in the foregoing embodiment. The storage module 1030 may be a register, a cache, a random access memory (random access memory, RAM), or the like. The storage module 1030 may be integrated with the processing module 1020. The storage module 1030 may be a read-only memory (read-only memory, ROM) or another type of static storage device that can store static information and instructions. The storage module 1030 may be independent of the processing module 1020.

In a possible implementation, the call apparatus 1000 may further include a communication module 1040. The communication module 1040 is configured to support interaction between the call apparatus 1000 and another device. For example, when the call apparatus 1000 is the terminal device 100, the communication module 1040 may be a communication interface or an interface circuit. When the call apparatus 1000 is a chip or a chip system in the terminal device 100, the communication module 1040 may be a communication interface. For example, the communication interface may be an input/output interface, a pin, a circuit, or the like.

The apparatus in this embodiment may be correspondingly configured to perform steps performed in the foregoing method embodiment. An implementation principle and technical effect of the apparatus are similar, and details are not described herein again.

FIG. 11 is a diagram of a structure of a call apparatus according to another embodiment of this application. As shown in FIG. 11, the apparatus 1100 includes a memory 1110, a processor 1120, a communication interface 1130, and a bus 1140. The memory 1110, the processor 1120, and the communication interface 1130 implement mutual communication connections through the bus 1140.

The memory 1110 may be a read-only memory (read-only memory, ROM), a static storage device, a dynamic storage device, or a random access memory (random access memory, RAM). The memory 1110 may store a program. When the program stored in the memory 1110 is executed by the processor 1120, the processor 1120 is configured to perform steps in the method shown in FIG. 4.

The processor 1120 may be a general-purpose central processing unit (central processing unit, CPU), a microprocessor, an application-specific integrated circuit (application-specific integrated circuit, ASIC), or one or more integrated circuits and is configured to execute a related program, to implement the method in the method embodiment of this application.

The processor 1120 may alternatively be an integrated circuit chip and has a signal processing capability. In an implementation process, the steps in embodiments of this application may be completed by using an integrated logic circuit of hardware or instructions in a form of software in the processor 1120.

The processor 1120 may alternatively be a general-purpose processor, a digital signal processor (digital signal processing, DSP), an application-specific integrated circuit (ASIC), a field programmable gate array (field programmable gate array, FPGA) or another programmable logic device, a discrete gate or a transistor logic device, or a discrete hardware component. The processor 1120 may implement or perform the method, the steps, and logical block diagrams that are disclosed in embodiments of this application. The general-purpose processor may be a microprocessor, or the processor may be any conventional processor or the like.

The steps in the method disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1110. The processor 1120 reads information in the memory 1110 and completes, in combination with hardware of the processor 1120, functions that need to be implemented by modules included in a communication device in this application, for example, may perform the steps/functions in the method shown in FIG. 4.

Optionally, the memory 1110 and the processor 1120 may be integrated together.

The communication interface 1130 may use, but is not limited to, a transceiver apparatus such as a transceiver, to implement communication between the apparatus 1100 and another device or communication network.

It should be noted that the modules or components shown in the foregoing embodiments may be one or more integrated circuits configured to implement the foregoing method, for example, one or more ASICs, one or more microprocessors (digital signal processor, DSP), or one or more FPGAs. For another example, when one of the foregoing modules is implemented in a form in which a processing element invokes program code, the processing element may be a general-purpose processor, for example, a CPU, or another processor, for example, a controller, that can invoke program code. For another example, these modules may be integrated together and implemented in a form of a system-on-a-chip (system-on-a-chip, SoC).

All or some of the foregoing embodiments may be implemented by software, hardware, firmware, software modules or any combination thereof. When software is used to implement the embodiments, all or a part of the embodiments may be implemented in a form of a computer program product. The computer program product includes one or more computer instructions. When the computer program instructions are loaded and executed on a computer, all or a part of the procedures or functions according to embodiments of this application is generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (SSD)), or the like.

The term "a plurality of" in this specification means two or more. The term "and/or" in this specification describes only an association relationship for describing associated objects and represents that three relationships may exist. For example, A and/or B may represent the following three cases: Only A exists, both A and B exist, and only B exists. In addition, a character "/" in this specification usually indicates an "or" relationship between associated objects, and a character "/" in a formula usually indicates a "division" relationship between associated objects. In addition, it should be understood that in description of this application, terms such as "first" and "second" are merely used for distinguishing and description, but should not be understood as indicating or implying relative importance, or should not be understood as indicating or implying a sequence.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

## Claims

1. A call method, wherein the method comprises:
collecting, by a terminal device, audio data by using a first device, wherein the first device comprises one or more of a plurality of devices, and the plurality of devices comprise the terminal device and an external device that has established a connection relationship with the terminal device;
sending, by the terminal device to a call peer end, the audio data collected by the first device;
receiving, by the terminal device, audio data from the call peer end; and
playing, by the terminal device, the audio data from the call peer end by using a second device, wherein the second device comprises one or more of the plurality of devices, and at least one device in the first device and at least one device in the second device are different devices in the plurality of devices.

2. The method according to claim 1, wherein the method further comprises:
displaying, by the terminal device, a user interface, wherein the user interface comprises a microphone selection control and a speaker selection control, the microphone selection control is used to select a device to which a microphone that needs to be used to collect an audio signal during a call belongs, and the speaker selection control is used to select a device to which a speaker that needs to be used to play the audio signal during the call belongs;
collecting, by the terminal device, the audio data by using the first device comprises:
when a user selects the first device by using the microphone selection control, collecting, by the terminal device, the audio data by using the first device; and
playing, by the terminal device, the audio data from the call peer end by using the second device comprises:
when the user selects the second device by using the speaker selection control, playing, by the terminal device, the audio data from the call peer end by using the second device.

3. The method according to claim 1, wherein the method further comprises:
displaying, by the terminal device, a user interface, wherein the user interface comprises a call scenario selection control, and the call scenario selection control is used to select a call scenario;
collecting, by the terminal device, the audio data by using the first device comprises:
when an audio data collection device associated with the call scenario selected by a user by using the call scenario selection control comprises the first device, collecting, by the terminal device, the audio data by using the first device; and
playing, by the terminal device, the audio data from the call peer end by using the second device comprises:
when an audio data playing device associated with the call scenario selected by the user by using the call scenario selection control comprises the second device, playing, by the terminal device, the audio data from the call peer end by using the second device.

4. The method according to claim 3, wherein when the selected call scenario is an outdoor scenario, the first device comprises the terminal device, the second device comprises the external device, and the external device comprises a sound box; and/or
when the selected call scenario is a conference scenario, the first device comprises the external device, the external device comprises a headset, and the second device comprises the terminal device; and/or
when the selected call scenario is a voice enhancement scenario, the first device comprises the terminal device and the external device, and the second device comprises the terminal device and/or the external device.

5. The method according to any one of claims 1 to 4, wherein displaying, by the terminal device, the user interface comprises:
when the terminal device receives a call request input by the user, or when the terminal device answers a call request of the call peer end, displaying the user interface.

6. The method according to any one of claims 1 to 5, wherein when the first device comprises a plurality of devices in the plurality of devices, sending, by the terminal device to the call peer end, the audio data collected by the first device comprises:
performing, by the terminal device, synthesis processing on the audio data collected by the first device to obtain synthesized audio data; and
sending, by the terminal device, the synthesized audio data to the call peer end.

7. The method according to claim 6, wherein performing, by the terminal device, synthesis processing on the audio data collected by the first device to obtain the synthesized audio data comprises:
obtaining, by the terminal device, first audio data collected by the terminal device and a start timestamp corresponding to the first audio data;
obtaining, by the terminal device, second audio data collected by the external device and a start timestamp corresponding to the second audio data, wherein the terminal device and the external device use a same clock source; and
aligning the first audio data with the second audio data based on the start timestamps, and performing synthesis processing on the first audio data and the second audio data to obtain the synthesized audio data.

8. A call apparatus, comprising each functional module configured to implement the method according to any one of claims 1 to 7.

9. A call apparatus, comprising a processor and a memory, wherein
the memory is configured to store program instructions; and
the processor is configured to execute the program instructions in the memory, to perform the method according to any one of claims 1 to 7.

10. A computer program product, comprising computer program code, wherein when the computer program code is run on a computer, the computer is enabled to implement the method according to any one of claims 1 to 7.

11. A computer-readable medium, wherein the computer-readable medium stores program code to be executed by a computer, and the program code comprises instructions for performing the method according to any one of claims 1 to 7.
